# EUROPEAN PATENT SPECIFICATION

(11) **EP 3 176 999 B1**
(45) Date of publication and mention of the grant of the patent: **11.03.2020**
(21) Application number: 16182628.4
(22) Date of filing: 03.08.2016
(51) Int. Cl.: H04M 1/725, H04M 1/2745

(54) **METHOD AND DEVICE FOR PROCESSING INFORMATION**
VERFAHREN UND VORRICHTUNG ZUR INFORMATIONSVERARBEITUNG
PROCÉDÉ ET DISPOSITIF DE TRAITEMENT D'INFORMATIONS

(30) Priority: 01.12.2015 CN 201510862737
(43) Date of publication of application: 07.06.2017
(73) Proprietor: Xiaomi Inc., Beijing 100085 (CN)
(72) Inventor: WANG, Qian, Beijing, Beijing 100085 (CN); ZHU, Yin, Beijing, Beijing 100085 (CN)
(74) Representative: Jeffrey, Philip Michael

(56) References cited:
- EP-A1- 2 375 714
- EP-A1- 2 891 956

## Description

### TECHNICAL FIELD

The present disclosure generally relates to the field of computer technologies, and more particularly, to a method and a device for processing information.

### BACKGROUND

With the development of terminal technologies, users can use a variety of applications installed in a terminal to perform various operations such as sending an SMS, calculating, paying fees, transferring funds, and the like, which brings great convenience to users' lives. Currently, when using multiple unrelated applications, the user needs to frequently switch between different applications to perform the respective function.

EP 2891956 discloses a letter inputting method, system and device.

EP 2375714 discloses a method whereby applications are suggested based on the content of a message that has been entered by a user.

### SUMMARY

Embodiments of the present disclosure provide a method and a device for processing information. The technical solutions are as follows.

According to an aspect of the present invention, there is provided a method for processing information as claimed in claim 1.

In this technical solution, a corresponding application is called, according to the type of the message entered in an information interface, to process the message, and display the processing result in the information interface, such that a user can call multiple applications in one information interface.

Optionally, the method further includes:
determining corresponding relationships between message types and applications, and storing the corresponding relationships in the terminal.

Optionally, according to the type of the message, calling an application to process the contents of the message, includes:
when the message entered by the user is recognized as communication information, calling a contact list in the terminal and sending the communication information to the contact list that is queried to determine whether the communication information matches one or more entries in the contact list, wherein the contact list includes at least one of a local phonebook and a contact list in an IM (instant messaging) application.

Optionally, while displaying the message entered by the user in the information interface, displaying information related to the processing result in the information interface, includes:
while displaying the communication information entered by the user in the information interface, sequentially displaying the one or more entries that matches the communication information; or
while displaying the communication information entered by the user in the information interface, displaying an identifier of the contact list that contains at least one entry matching the communication information; or
while displaying the communication information entered by the user on the information interface, marking up, in the information interface, the communication information that is determined matching one or more entries in the contact list.

In the present embodiment, when a user enters communication information (e.g., a person's name) in an information interface, a local phonebook in a terminal and/or a contact list in an IM application installed in the terminal can be called, to be queried to determine whether the communication information matches an entry in the phonebook or the contact list of the IM application. If the communication information matches one or more entries in the phonebook and/or the contact list of the IM application, contact information (such as a phone number, an address, a mail box or an account of the IM application and the like) corresponding to the person name can be displayed in a candidate word displaying region of the information interface as candidate item(s), such that the user can select the contact information for further use. Or, if the communication information matches one or more entries in the phonebook and/or the contact list of the IM application, an identifier of the phonebook and/or the IM application is displayed in the candidate word displaying region on the information interface as candidate items, such that the user can click and open the phonebook or the IM application in the information interface, so as to implement operations such as sending or inquiring information, without needing to return to the desktop to find and open the phonebook or the IM application. Or, if the communication information matches one or more entries in the phonebook and/or the contact list of the IM application, the person's name is marked up in the information interface, to inform the user that the person's name is present in the phonebook or friends list of the IM application.

According to the type of the message, calling an application to process the contents of the message, includes:
when the message entered by the user is recognized as a calculation formula, calling a calculator in the terminal and sending the calculation formula to the calculator to calculate the calculation formula through the calculator.

While displaying the message entered by the user in the information interface, displaying information related to the processing result in the information interface, includes:
while displaying the calculation formula entered by the user in the information interface, displaying a calculation result after the calculation formula; or
while displaying the calculation formula entered by the user in the information interface, displaying a calculation result in a candidate word displaying region of the information interface.

In the present embodiment, when a user enters a calculation formula in an information interface, a calculator software installed on a terminal can be called to calculate the calculation formula, and a calculation result can be returned and displayed as a candidate item in a candidate word displaying region on the information interface, such that the user can check the result or select the result for use.

According to the type of the message, calling an application to process the contents of the message, includes:
when the message entered by the user is recognized as a number, calling a payment application in the terminal and sending the number to the payment application to process the number through the payment application.

While displaying the message entered by the user in the information interface, displaying information related to the processing result in the information interface, includes:
while displaying the number entered by the user in the information interface, prompting the user whether to perform a transfer operation with a transfer amount equaling the number.

In this technical solution, when a user enters a number in an information interface (such as an SMS entering interface), a payment application installed in a terminal can be called, such that the payment application processes the number (for example, the payment application performs a deduction processing), and prompts the user whether to transfer money with the amount equaling the number to a contact; in this way, the user can transfer the corresponding money to the contact in the SMS entering interface. Or, an identifier of the payment application is displayed as a candidate item in a candidate word displaying region on the information interface, such that the user may select to use the displayed payment application in the information interface, without needing to jump to the desktop to select the payment application.

Optionally, according to the type of the message, calling an application to process the contents of the message by the application, includes:
when the message entered by the user is recognized as a word, calling an operating system of the terminal and sending the word to the operating system to determine, through the operating system, whether the terminal includes an application whose name matches the word.

Optionally, while displaying the message entered by the user in the information interface, displaying information related to the processing result in the information interface, includes:
while displaying the word on the information interface, displaying an identifier of the application whose name is determined to match the word.

In this technical solution, when a user enters a word in an information interface, an operating system of the terminal can be called to determine whether the terminal includes an application, whose name matches the word, is downloaded and/or installed in the terminal, and display an identifier of the matched application in a candidate word displaying region in the information interface, as a candidate word option for selection and use by the user.

According to the type of the message, calling an application to process the contents of the message, includes:
when the message entered by the user is recognized as a sentence, calling a predetermined application installed in the terminal and sending the sentence to the predetermined application to process the sentence through the predetermined application.

While displaying the message entered by the user in the information interface, displaying information related to the processing result in the information interface, includes:
while displaying the sentence entered by the user in the information interface, displaying a processing result generated by the predetermined application in processing the sentence.

In this technical solution, when a user enters a sentence (for example, "I am beside the fountain in × × Square") in an information interface (such as an SMS entering interface), a predetermined application (e.g., Map) installed in the terminal can be called to search for "the fountain in × × Square", and the found address is displayed in the information interface for selection and use by the user, such that the user can quickly know information relevant to a sentence currently-edited in the information interface.

According to another aspect of the present invention, there is provided a device for processing information as claimed in claim 7.

In this technical solution, a corresponding application can be called according to the type of a message entered in an information interface to process the contents of the message, and a corresponding processing result is displayed in the information interface, such that an applications can be called in one information interface.

Optionally, the device further includes:
an information storage module configured to determine corresponding relationships between messages types and applications, and store the corresponding relationships.

Optionally, when the message entered by the user is recognized as communication information, the application calling module is configured to call a contact list in the terminal and send the communication information to the contact list that is queried to determine whether the communication information matches one or more entries in the contact list, wherein the contact list includes at least one of a local phonebook and a contact list in an IM application.

Optionally, the information display module includes:
a first display sub-module configured to, while displaying the communication information entered by the user on the information interface, sequentially display the one or more entries that match the communication information; or
a second display sub-module configured to, while displaying the communication information entered by the user in the information interface, display an identifier of the contact list that contains at least one entry matching the communication information; or
a third display sub-module configured to, while displaying the communication information entered by the user in the information interface, mark up, in the information interface, the communication information that is determined matching one or more entries in the contact list.

In the present embodiment, when a user enters communication information (e.g., a person's name) in an information interface, a local phonebook in the terminal and/or a contact list in an IM application installed in the terminal can be called, to be queried to determine whether the communication information matches an entry in the phonebook or the contact list of the IM application. If the communication information matches one or more entries in the phonebook and/or the contact list of the IM application, contact information (such as a phone number, an address, a mail box or an account of the IM application and the like) is displayed in a candidate word displaying region of the information interface, as candidate items for selection and use by the user. Or, if the communication information matches one or more entries in the phonebook and/or the contact list of the IM application, an identifier of the phonebook or the IM application stored with the communication information is displayed in the candidate word displaying region on the information interface as candidate items, such that the user can click and open the phonebook or the IM application in the information interface, so as to implement operations such as sending or inquiring information, without needing to return to the desktop to find and open the phonebook or the IM application. Or, if the communication matches one or more entries in the phonebook and/or the contact list of the IM application, the person's name is marked up in the information interface, to inform the user that the person's name is present in the phonebook or friends list of the IM application.

When the message entered by the user is recognized as a calculation formula, the application calling module is configured to call a calculator in the terminal and send the calculation formula to the calculator to process the calculation formula through the calculator.

The information display module includes:
a display sub-module configured to, while displaying the calculation formula entered by the user in the information interface, display a calculation result after the calculation formula; or
while displaying the calculation formula entered by the user on the information interface, display, in an candidate word displaying region of the information interface, the calculation result.

In the present embodiment, when a user enters a calculation formula in an information interface, a calculator installed in a terminal can be called to calculate the calculation formula, and a calculation result can be returned and displayed as a candidate item in a candidate word displaying region of the information interface, such that the user can check the result or select the result for use.

When the message entered by the user is recognized as a number, the application calling module is configured to call a payment application in the terminal and send the number to the payment application to process the number through the payment application.

The information display module is configured to, while displaying the number entered by the user in the information interface, prompt the user whether to transfer funds with an equal amount to the number.

In this technical solution, when a user enters a number on an information interface (such as an SMS entering interface), a payment application installed in a terminal can be called, such that the payment application processes the number (for example, the payment application performs a deduction processing), and prompts the user whether to transfer funds with the equal amount to the number to a contact; in this way, the user can transfer the corresponding money to the contact in the SMS entering interface. Or, an identifier of the payment application is displayed as a candidate item in a candidate word displaying region of the information interface, such that the user may select to use the displayed payment application in the information interface, without needing to jump to the desktop to select the payment application.

Optionally, when the message entered by the user is recognized as a word, the application calling module is configured to call an operating system of the terminal and send the word to the operating system to determine, through the operating system, whether the terminal includes an application whose name matches the word.

Optionally, the information display module is configured to, while displaying the word in the information interface, display an identifier of the application whose name is determined to match the word.

In this technical solution, when a user enters a word in an information interface, a operating system can be called to determine whether an application, whose name matches the word, is downloaded and/or installed in the terminal, and an identifier of the matched application is displayed in a candidate word displaying region of the information interface, as a candidate word option for selection and use by the user.

When the message entered by the user is recognized as a sentence, the application calling module is configured to call a predetermined application installed in the terminal and send the sentence to the preset application to process the sentence through the preset application.

The information display module is configured to, while displaying the sentence entered by the user in the information interface, display a processing result generated by the predetermined application in processing the sentence.

In this technical solution, when a user enters a sentence (for example, "I am beside the fountain in × × Square") in an information interface (such as an SMS entering interface), a predetermined application (e.g., Map) installed in the terminal can be called to search for "the fountain in × × Square" on the Map, and the fund address is displayed in the information interface for selection and use by the user, such that the user can quickly know information relevant to a sentence currently-edited in the information interface.

Advantageously, there is provided a device for processing information, including:
a processor; and
a memory for storing instructions executable by the processor;
wherein the processor is configured to perform the method according to claim 1.

Advantageously, there is provided a computer program which, when being executed on a processor of a device, performs any one of the above methods.

The technical solutions provided by the embodiments of the present disclosure may have the following advantageous effects.

In the technical solutions, a message entered by a user in an information interface is received, and a type of the message entered by the user is recognized; according to the type of the message, an application corresponding to the type of the message is called, and the contents of the message are processed by the application; a processing result generated by the application in processing the contents of the message is received; and while displaying the message entered by the user in the information interface, information related to the processing result is displayed. A corresponding application can be called according to a type of a message entered in an information interface to process the message, and the process result is displayed in the information interface, such that different applications can be called in one information interface.

It is to be understood that both the foregoing general description and the following detailed description are exemplary and explanatory only and are not restrictive of the present invention, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for processing information according to an exemplary embodiment.
Fig. 2 is a flowchart showing a method for processing information according to an exemplary embodiment.
Fig. 3 is a block diagram showing a device for processing information according to an exemplary embodiment.
Fig. 4 is a block diagram showing a device for processing information according to an exemplary embodiment.
Fig. 5 is a block diagram showing an information display module according to an exemplary embodiment.
Fig. 6 is a block diagram showing an information display module according to an exemplary embodiment.
Fig. 7 is a block diagram showing a device for processing information according to an exemplary embodiment.

Through the above accompanying drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

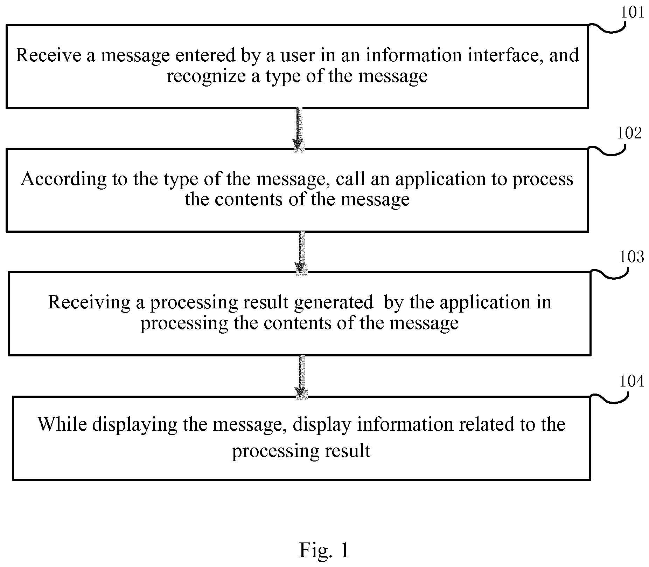

Fig. 1 is a flowchart showing a method for processing information according to an exemplary embodiment. In the present embodiment, it is described by way of example that the method for processing information is applied in terminals such as a mobile phone, a tablet computer or a smart TV. As shown in Fig. 1, the method for processing information includes the following steps.

In step 101, a message entered by a user in an information interface is received, and a type of the message entered by the user is recognized.

In step 102, according to the type of the recognized message, an application corresponding to the contents of the message is called to process the contents of the message.

In step 103, a processing result generated by the application in processing the contents of the message is received.

In step 104, in addition to the message entered by the user, information related to the processing result is displayed in the information interface.

In this technical solution, a message entered by a user in an information interface is received, and a type of the message entered by the user is recognized; according to the type of the recognized message, an application corresponding to the contents of the message is called, and the contents of the message are processed by the application; a processing result generated by the application in processing the contents of the message is received; and in addition to the message entered by the user, information related to the processing result is displayed. A corresponding application can be called according to a type of a message entered in an information interface to process the message, and a corresponding processing result (such that identifiers of some applications) can be displayed in the information interface for further use.

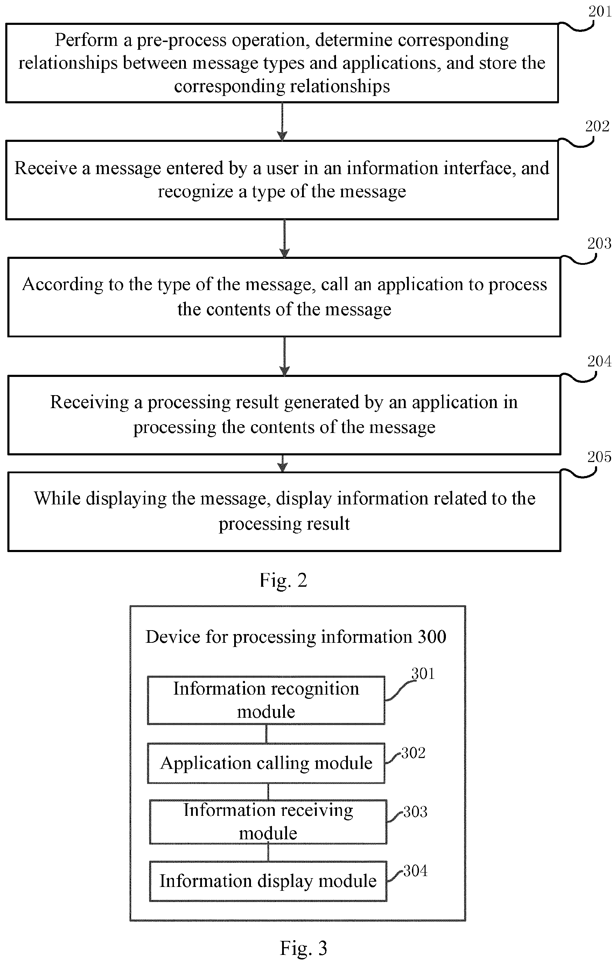

Fig. 2 is a flowchart showing a method for processing information according to an exemplary embodiment. In the present embodiment, it is described by way of example that the method for processing information is applied in terminals such as a mobile phone, a tablet computer or a smart TV. As shown in Fig. 2, the method for processing information includes the following steps.

In step 201, a pre-processing operation is performed, corresponding relationships between message types and applications are determined, and the corresponding relationships are stored in the terminal.

Optionally, the corresponding relationships between message types and the applications may include: communication information corresponding to an application for storing and managing a contact list (hereinafter referred to as "contact list"), calculation formulas corresponding to an application for performing calculations (hereinafter referred to as "calculator"), numbers corresponding to an application for making payments (hereinafter referred to as "payment application"), words corresponding to an operating system of the terminal (herein after referred to as "terminal system"), and sentences corresponding to a predetermined application (e.g., map, gallery, and the like)..

Where, "sentence" used in this disclosure includes at least a predicate and an object, and "word" used in this disclosure is constituted of morphemes, and is the smallest language unit (other than communication information, calculation formula or a number) that can be independently used.

In step 202, a message entered by a user in an information interface is received, and a type of the message entered by the user is recognized.

For example, it is recognized whether the message entered by the user is communication information (including a person's legal name, a nickname and the like), a number, a calculation formula, a sentence or a word.

After a message entered by a user in an information interface is received, a type of the entered message is recognized, and according to the type of the message, a corresponding application is called to process the entered message, and a corresponding processing result is displayed in the information interface, such that the user can perform a subsequent operation according to the processing result.

In step 203, according to the type of the message, an application corresponding to the type of the message is called to process the contents of the message.

Herein, there are the following situations according to the type of the message entered by the user.

In a first situation, according to the type of the message, calling an application to process the contents of the message, includes:
when the message entered by the user is recognized as communication information, calling a contact list in the terminal and sending the communication information to the contact list, to be queried to determine whether the communication information matches one or more entries in the contact list, wherein the contact list may include a local phonebook and/or a contact list in an IM application.

In a second situation, according to the type of the message, calling an application to process the contents of the message, includes:
when the message entered by the user is recognized as a calculation formula, calling a calculator in the terminal and sending the calculation formula to the calculator to calculate the calculation formula through the calculator.

In a third situation, according to the type of the message, calling an application to process the contents of the message, includes:
when the message entered by the user is recognized as a number, calling a payment application in the terminal and sending the number to the payment application to process the number through the payment application.

In a fourth situation, according to the type of the message, calling an application to process the contents of the message, includes:
when the message entered by the user is recognized as a word, calling a terminal system and sending the word to the terminal system to determine, through the terminal system, whether there is a locally installed application's name matching the word.

In a fifth situation, according to the type of the message, calling an application to process the contents of the message, includes:
when the message entered by the user is recognized as a sentence, calling a predetermined application installed in the terminal and sending the sentence to the predetermined application toprocess the sentence through the predetermined application.

In step 204, a processing result, generated by the application in processing the contents of the message, is received.

In step 205, in addition to the message entered by the user in the information interface, information related to the processing result is displayed.

Herein, there are five processing situations in step 205 respectively corresponding to the five situations in the above step 203.

In a first situation, when the message entered by the user is recognized as communication information, while displaying the message entered by the user in the information interface, displaying information related to the processing result, includes:
while displaying the communication information entered by the user in the information interface, sequentially displaying the one or more entry that matches the communication information; or
while displaying the communication information entered by the user in the information interface, displaying an identifier of the contact list that contains at least one entry matching the communication information; or
while displaying the communication information entered by the user in the information interface, marking up, in the interface communication, the communication information that is determined matching the one or more entries.

For the first situation, when a user enters communication information (e.g., a person's name) in an information interface, a local phonebook in the terminal or a contact list in an IM application installed in the terminal can be called, to be queried to determine whether the communication information matches one or more entries in the phonebook or the contact list of the IM application; If the communication information matches one or more entries in the phonebook or the contact list of the IM application, contact information (such as a phone number, an address, a mail box or an account of the IM application) corresponding to the person's name can be displayed in a candidate word displaying region in the information interface, as candidate item(s) for selection and use by the user. Or, If the communication information matches one or more entries in the phonebook and/or the contact list of the IM application, an identifier of the phonebook and/or the IM application that contains at least one entry matching the communication information is displayed in the candidate word displaying region of the information interface as candidate item(s), such that the user can click and open the phonebook or the IM application in the information interface, so as to implement operations such as sending or inquiring information, without needing to return to the desktop to find and open the phonebook or the IM application. Or, if the communication information(the person's name) matches one or more entries in the phonebook or the contact list of the IM application, the communication information(the person's name) is marked up in the information interface, to inform the user that the person's name is present in the phonebook and/or friends list of the IM application.

In a second situation, when the message entered by the user is recognized as a calculation formula, while displaying the message entered by the user in the information interface, displaying information related to the processing result in the information interface, includes:
while displaying the calculation formula entered by the user in the information interface, displaying a calculation result after the calculation formula; or
while displaying the calculation formula entered by the user in the information interface, displaying, in a candidate word displaying region of the information interface, an identifier of the calculator or the calculation result.

For the second situation, when a user enters a calculation formula in an information interface, a calculator software installed in the terminal can be called to calculate the calculation formula, and a calculation result can be returned and displayed as a candidate item in a candidate word displaying region of the information interface, such that the user can check the result or select the result for use.

In a third situation, when the message entered by the user is recognized as a number, while displaying the message entered by the user in the information interface, displaying information related to the processing result in the information interface, includes:
while displaying the number entered by the user in the information interface, displaying an identifier of the payment application or prompting the user whether to perform a transfer operation with a transfer amount equaling the number.

For the third situation, when a user enters a number in an information interface (such as an SMS entering interface), a payment application installed in a terminal can be called, such that the payment application processes the number (for example, the payment application performs a deduction processing), and prompts the user whether to transfer money with the amount equaling the number to a contact; in this way, the user can transfer the corresponding money to the contact in the SMS entering interface. Or, an identifier of the payment application is displayed as a candidate item in a candidate word displaying region of the information interface, such that the user may select to use the displayed payment application in the information interface, without needing to jump to the desktop to select the payment application.

In a fourth situation, when the message entered by the user is recognized as a word, while displaying the message entered by the user on the information interface, displaying information related to the processing result in the information interface, includes:
while displaying the word in the information interface, displaying an identifier of an application whose name is determined to match the word.

For the fourth situation, when a user enters a word in an information interface, a terminal system can be called to determine whether an application whose name matches the word is downloaded and/or installed in the terminal, and an identifier of the matched application is displayed in a candidate word displaying region of the information interface, as a candidate word option for selection and use by the user.

In a fifth situation, when the message entered by the user is recognized as a sentence, while displaying the message entered by the user in the information interface, displaying information related to the processing result in the information interface, includes:
while displaying the sentence entered by the user in the information interface, displaying an identifier of the predetermined application, or displaying a processing result generated by the predetermined application in processing of the sentence by the preset application.

For the fifth situation, when a user enters a sentence (for example, "I am beside the fountain in × × Square") in an information interface (such as an SMS entering interface), a predetermined application (e.g., Map) installed in the terminal can be called to search for "the fountain in × × Square", and return the found address, that is displayed in the information interface for selection and use by the user, such that the user can quickly know information relevant to a sentence currently-edited in the information interface.

In conclusion, in technical solutions of the present disclosure, a message entered by a user in an information interface is received, and a type of the message entered by the user is recognized; according to the type of the recognized message, an application corresponding to the contents of the message is called, and the contents of the message are processed by the application; a processing result generated by the application in processing of the contents of the message is received; and while displaying the message entered by the user in the information interface, information related to the processing result is displayed. A corresponding application can be called according to a message entered in an information interface to process the message and a corresponding processing result is displayed in the information interface, such that different applications can be called in one information interface.

The following are embodiments of the devices of the present disclosure, which may be used to perform the embodiments of the methods of the present disclosure. For the undisclosed details in the embodiments of the devices, refer to the embodiments of the methods of the present disclosure.

Fig. 3 is a block diagram showing a device 300 for processing information according to an exemplary embodiment. The device 300 for processing information may be implemented by software, hardware or a combination of the both into a part of or whole of a terminal, and the terminal may be a mobile phone, a tablet computer or a smart TV. The device 300 for processing information may include an information recognition module 301, an application calling module 302, an information receiving module 303 and an information display module 304.

The information recognition module 301 is configured to receive a message entered by a user on an information interface, and recognize a type of the message entered by the user.

The application calling module 302 is configured to, according to the type of the recognized message, call an application to process the contents of the message.

The information receiving module 303 is configured to receive a processing result generated by the application in processing the contents of the message by the application.

The information display module 304 is configured to, while displaying the message entered by the user in the information interface, display information related to the processing result in the information interface.

In conclusion, in this technical solution, a message entered by a user in an information interface is received, and a type of the message entered by the user is recognized; according to the type of the message, an application corresponding to the type of the message is called, and the contents of the message are processed by the application; a processing result generated by the application in processing the contents of the message is received; and while displaying the message entered by the user in the information interface, information related to the processing result is displayed. A corresponding application can be called according to a message entered in an information interface to process the message and a corresponding processing result is displayed in the information interface, such that different applications can be called in one information interface.

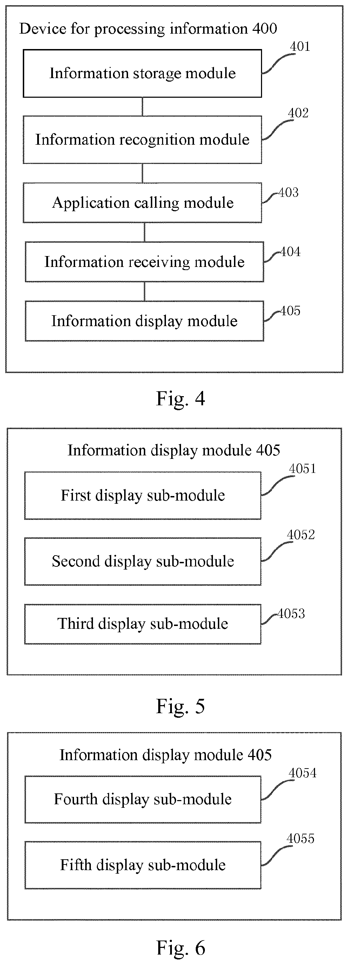

Fig. 4 is a block diagram showing a device 400 for processing information according to an exemplary embodiment. The device 400 for processing information may be implemented by software, hardware or a combination of the both into a part of or whole of a terminal, and the terminal may be a mobile phone, a tablet computer or a smart TV. The device 400 for processing information may include an information storage module 401, an information recognition module 402, an application calling module 403, an information receiving module 404 and an information display module 405.

The information storage module 401 is configured to determine corresponding relationships between message types and applications, and store the corresponding relationships.

The information recognition module 402 is configured to receive a message entered by a user in an information interface, and recognize a type of the message entered by the user.

The application calling module 403 is configured to, according to the type of the message, call an application to process the contents of the message.

The information receiving module 404 is configured to receive a processing result generated by the application in processing the contents of the message.

The information display module 405 is configured to, while displaying the message entered by the user in the information interface, process information related to the processing result.

Optionally, when the message entered by the user is recognized as communication information, the application calling module 403 is configured to call a contact list in the terminal and send the communication information to the contact list that is queried to determine whether the communication information matches one or more entries in the contact list, wherein the contact list may include a local phonebook and/or a contact list in an IM application.

Correspondingly, referring to Fig. 5, when the message entered by the user is recognized as communication information, the information display module 405 includes a first display sub-module 4051, a second display sub-module 4052 or a third display sub-module 4053.

The first display sub-module 4051 is configured to, while displaying the communication information entered by the user in the information interface, sequentially display the one or more entries that match the communication information; or

The second display sub-module 4052 is configured to, while displaying the communication information entered by the user in the information interface, display an identifier of the contact list that contains at least one entry matching the communication information; or

The third display sub-module 4053 is configured to, while displaying the communication information entered by the user in the information interface, marking up, in the information interface, the communication that is determined match the one or more entries in the contact list.

In the present embodiment, when a user enters communication information (e.g., a person's name) in an information interface, a local phonebook in a terminal and/or a contact list in an IM application installed in the terminal can be called, to be queried to determine whether the communication information matches one or more entries in the phonebook or the contact list of the IM application. If the communication information matches one or more entries in the phonebook and/or the contact list of the IM application, contact information (such as a phone number, an address, a mail box or an account of the IM application) corresponding to the person's name can be displayed in a candidate word displaying region of the information interface as candidate items, such that the user can choose from them for use. Or, if the communication information matches one or more entries in the phonebook and/or the contact list of the IM application, an identifier of the phonebook or the IM application that contains at least one entry matching the communication information is displayed in the candidate word displaying region of the information interface as candidate items, such that the user can click and open the phonebook or the IM application in the information interface, so as to implement operations such as sending or inquiring information, without needing to return to the desktop to find and open the phonebook or the IM application. Or, if the communication information matches one or more entries in the phonebook or the contact list of the IM application, communication information(e.g., the person's name) is marked up, to inform the user that the communication information(e.g., person's name) is present in the phonebook or friends list of the IM application.

When the message entered by the user is recognized as a calculation formula, the application calling module 403 is configured to call a calculator in the terminal and send the calculation formula to the calculator to process the calculation formula through the calculator.

Correspondingly, referring to Fig. 6, when the message entered by the user is recognized as a calculation formula, the information display module 405 includes a fourth display sub-module 4054 or a fifth display sub-module 4055.

The fourth display sub-module 4054 is configured to, while displaying the calculation formula entered by the user in the information interface, display a calculation result after the calculation formula.

The fifth display sub-module 4055 is configured to, while displaying the calculation formula entered by the user in the information interface, display, in candidate word displaying region of the information interface, an identifier of the calculator or the calculation result.

In the present embodiment, when a user enters a calculation formula on an information interface, a calculator software installed on a terminal can be called to calculate the calculation formula, and a calculation result can be returned and displayed as a candidate word in a candidate word displaying region on the information interface, such that the user can check the result or select the result for use.

When the message entered by the user is recognized as a number, the application calling module 403 is configured to call a payment application in the terminal and send the number to the payment application to process the number through the payment application.

Correspondingly, when the message entered by the user is recognized as a number, the information display module 405 is configured to, while displaying the number entered by the user in the information interface, display an identifier of the payment application or prompt the user whether to perform a transfer operation with a transfer amount equaling the number.

In this technical solution, when a user enters a number in an information interface (such as an SMS entering interface), a payment application installed in a terminal can be called, such that the payment application processes the number (for example, the payment application performs a deduction processing), and prompts the user whether to transfer money with the amount equaling the number to a contact; in this way, the user can transfer the corresponding money to the contact in the SMS entering interface. Or, an identifier of the payment application is displayed as a candidate item in a candidate word displaying region of the information interface, such that the user may select to use the displayed payment application in the information interface, without needing to jump to the desktop to select the payment application.

Optionally, when the message entered by the user is recognized as a word, the application calling module 403 is configured to call a terminal system and send the word to the terminal system to determine, through the terminal system, whether the terminal includes an application whose name matches the word.

Correspondingly, when the message entered by the user is recognized as a word, the information display module 405 is configured to, while displaying the word in the information interface, display an identifier of an application whose name is determined to match the word.

In this technical solution, when a user enters a word in an information interface, a terminal system can be called to determine whether an application whose name matches the word is downloaded and/or installed in the terminal, and an identifier of the matched application is displayed in a candidate word displaying region of the information interface, as a candidate word option for selection and use by the user.

When the message entered by the user is recognized as a sentence, the application calling module 403 is configured to call a predetermined application installed in the terminal and send the sentence to the predetermined application to process the sentence through the preset application.

Correspondingly, when the message entered by the user is recognized as a sentence, the information display module 405 is configured to, while displaying the sentence entered by the user in the information interface, display an identifier of the predetermined application, or display a processing result generated by the predetermined application in processing of the sentence.

In this technical solution, when a user enters a sentence (for example, "I am beside the fountain in × × Square") in an information interface (such as an SMS entering interface), a predetermined application (e.g., Map) installed in the terminal can be called to search for "the fountain in × × Square", and return the found address. The found address is displayed in the information interface for selection and use by the user, such that the user can quickly know information relevant to the sentence currently-edited in the information interface.

With respect to the devices in the above embodiments, the specific manners for performing operations by individual modules therein have been described in detail in the embodiments regarding the methods, which will not be elaborated herein.

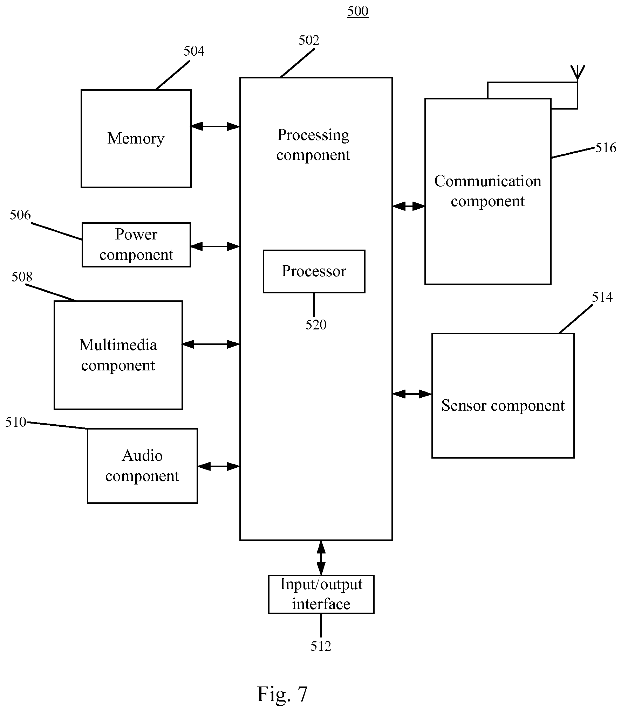

Fig. 7 is a block diagram showing a device 500 for processing information according to an exemplary embodiment. For example, the device 500 may be terminal devices such as a mobile phone, a tablet computer, a smart TV or the like.

Referring to Fig. 7, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. The screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. The multimedia component 508 may include a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516 The audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. The sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. The communication component 516 receives a broadcast signal or broadcast associated information from an external broadcast management system via a broadcast channel. The communication component 516 may further include a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

According to a comparative example useful for understanding the invention but outside the scope of the invention as claimed, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for processing information.

According to a further comparative example useful for understanding the invention but outside the scope of the invention as claimed, it could also be provided a non-transitory computer-readable storage medium including instructions, such as included in the memory 504, executable by the processor 520 in the device 500, for performing the above-described methods for processing information. For example, the non-transitory computer-readable storage medium may be a ROM, a RAM, a CD-ROM, a magnetic tape, a floppy disc, an optical data storage device, and the like.

The non-transitory computer-readable storage medium may include instructions which, when executed by the processor of the device 500, cause the device 500 to perform the above described method for processing information.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for processing information, wherein the method is carried out in a terminal and comprises:
receiving (101, 202) a message entered by a user in an information interface, and recognizing a type of the message entered by the user;
according to the type of the message, calling (102, 203) an application to process the contents of the message;
receiving (103, 204) a processing result generated by the application in processing the contents of the message; and
while displaying the message entered by the user in the information interface, displaying (104, 205) information related to the processing result in the information interface;
**characterised in that** the step of according to the type of the message, calling (102, 203) an application to process the contents of the message comprises at least one of:
(i) when the message entered by the user is recognized as a calculation formula, calling a calculator in the terminal and sending the calculation formula to the calculator to calculate the calculation formula through the calculator; wherein while displaying the message entered by the user in the information interface, displaying (104, 205) information related to the processing result in the information interface, comprises: while displaying the calculation formula entered by the user in the information interface, displaying a calculation result after the calculation formula or in a candidate word displaying region of the information interface;
(ii) when the message entered by the user is recognized as a number, calling a payment application in the terminal and sending the number to the payment application to process the number through the payment application; wherein while displaying the message entered by the user in the information interface, displaying (104, 205) information related to the processing result in the information interface, comprises: while displaying the number entered by the user in the information interface, prompting the user whether to perform a transfer operation with a transfer amount equaling the number; and
(iii) when the message entered by the user is recognized as a sentence, calling a predetermined application installed in the terminal and sending the sentence to the predetermined application to process the sentence through the predetermined application; wherein while displaying the message entered by the user in the information interface, displaying (104, 205) information related to the processing result in the information interface, comprises: while displaying the sentence entered by the user in the information interface, displaying a processing result generated by the predetermined application in processing of the sentence.

2. The method according to claim 1, further comprising:
determining (201) corresponding relationships between message types and applications, and storing the corresponding relationships.

3. The method according to claim 1 or 2, wherein according to the type of the message, calling (102, 203) an application to process the contents of the message, comprises:
when the message entered by the user is recognized as communication information, calling a contact list in the terminal and sending the communication information to the contact list, the contact is queried to determine whether the communication information matches one or more entries in the contact list, wherein the contact list comprises at least one of a local phonebook or a contact list in an IM application.

4. The method according to claim 3, wherein while displaying the message entered by the user in the information interface, displaying (104, 205) information related to the processing result in the information interface, comprises:
while displaying the communication information entered by the user in the information interface, sequentially displaying the one or more entries that match the communication information; or
while displaying the communication information entered by the user in the information interface, displaying an identifier of the contact list that contains at least one entry matching the communication information; or
while displaying the communication information entered by the user in the information interface, marking up, in the information interface, the communication information that is determined matching one or more entries in the contact list.

5. The method according to claim 1 or 2, wherein according to the type of the message, calling (102, 203) an application to process the contents of the message, comprises:
when the message entered by the user is recognized as a word, calling a terminal system and sending the word to the terminal system to determine whether the terminal includes an application whose name matches the word.

6. The method according to claim 5, wherein while displaying the message entered by the user on the information interface, displaying (104, 205) information related to the processing result in the information interface, comprises:
while displaying the word in the information interface, displaying an identifier of an application whose name is determined matching the word.

7. A device (300, 400) for processing information, wherein the device (300, 400) comprises:
an information recognition module (301, 402) configured to receive a message entered by a user in an information interface, and recognize a type of the message entered by the user;
an application calling module (302, 403) configured to, according to the type of the message, call an application to process the contents of the message;
an information receiving module (303, 404) configured to receive a processing result generated by the application in processing the contents of the message; and
an information display module (304, 405) configured to, while displaying the message entered by the user in the information interface, display information related to the processing result in the information interface;
**characterised in that** the application calling module (302, 403) is configured to:
when the message entered by the user is recognized as a calculation formula, the application calling module (302, 403) is configured to call a calculator in the terminal and send the calculation formula to the calculator to calculate the calculation formula through the calculator; wherein the information display module (304, 405) is configured to, while displaying the calculation formula entered by the user in the information interface, display a calculation result after the calculation formula or in a candidate word displaying region of the information interface; and/or
when the message entered by the user is recognized as a number, the application calling module (302, 403) is configured to call a payment application in the terminal and send the number to the payment application to process the number through the payment application; wherein the information display module (304, 405) is configured to, while displaying the number entered by the user in the information interface, prompt the user whether to perform a transfer operation with a transfer amount equaling the number; and/or
when the message entered by the user is recognized as a sentence, the application calling module (302, 403) is configured to call a predetermined application installed in the terminal and send the sentence to the predetermined application to process the sentence through the predetermined application; wherein the information display module (304, 405) is configured to, while displaying the sentence entered by the user in the information interface, display a processing result generated by the predetermined application in processing of the sentence.

8. The device (300, 400) according to claim 7, wherein the application calling module (302, 403) is configured to:
when the message entered by the user is recognized as communication information, the application calling module (302, 403) is configured to call a contact list in the terminal and send the communication information to the contact list, the contact is queried to determine whether the communication information matches one or more entries in the contact list, the contact list comprises at least one of a local phonebook or a contact list in an IM application;
or when the message entered by the user is recognized as a word, the application calling module (302, 403) is configured to call a terminal system and send the word to the terminal system to determine whether the terminal includes an application whose name matches the word.

## Patentansprüche

1. Verfahren zum Verarbeiten von Informationen, wobei das Verfahren in einem Endgerät ausgeführt wird und umfasst:
Empfangen (101, 202) einer Nachricht, die von einem Benutzer in einer Informationsschnittstelle eingegeben wird, und Erkennen eines Typs der vom Benutzer eingegebenen Nachricht;
gemäß dem Typ der Nachricht, Aufrufen (102, 203) einer Applikation zum Verarbeiten der Inhalte der Nachricht;
Empfangen (103, 204) eines Verarbeitungsergebnisses, das von der Applikation beim Verarbeiten der Inhalte der Nachricht erzeugt wird; und
während die von dem Benutzer in der Informationsschnittstelle eingegebene Nachricht angezeigt wird, Anzeigen (104, 205) von Informationen, die mit dem Verarbeitungsergebnis zusammenhängen, in der Informationsschnittstelle,
**dadurch gekennzeichnet, dass**
der Schritt, in welchem gemäß dem Typ der Nachricht eine Applikation aufgerufen (102, 203) wird, um die Inhalte der Nachricht zu verarbeiten, zumindest eines von Folgendem umfasst:
(i) wenn die von dem Benutzer eingegebene Nachricht als eine Berechnungsformel erkannt wird, Aufrufen eines Rechners im Endgerät und Senden der Berechnungsformel an den Rechner zum Berechnen der Berechnungsformel durch den Rechner; wobei das Anzeigen (104, 205) von Informationen, die mit dem Verarbeitungsergebnis zusammenhängen, in der Informationsschnittstelle, während die von dem Benutzer eingegebene Nachricht in der Informationsschnittstelle angezeigt wird, umfasst: Während die von dem Benutzer eingegebene Berechnungsformel in der Informationsschnittstelle angezeigt wird, Anzeigen eines Berechnungsergebnisses nach der Berechnungsformel oder in einer Kandidaten-Wort-Anzeigeregion der Informationsschnittstelle;
(ii) wenn die von dem Benutzer eingegebene Nachricht als eine Zahl erkannt wird, Aufrufen einer Zahlungsapplikation in dem Endgerät und Senden der Zahl an die Zahlungsapplikation zum Verarbeiten der Zahl durch die Zahlungsapplikation; wobei das Anzeigen (104, 205) von Informationen, die mit dem Verarbeitungsergebnis zusammenhängen, in der Informationsschnittstelle, während die von dem Benutzer eingegebene Nachricht in der Informationsschnittstelle angezeigt wird, umfasst: Während die von dem Benutzer eingegebene Zahl in der Informationsschnittstelle angezeigt wird, Auffordern des Benutzers anzugeben, ob ein Transfervorgang mit einem der Zahl entsprechenden Transferbetrag durchgeführt werden soll; und
(iii) wenn die von dem Benutzer eingegebene Nachricht als ein Satz erkannt wird, Aufrufen einer in dem Endgerät installierten vorbestimmten Applikation und Senden des Satzes an die vorbestimmte Applikation zum Verarbeiten des Satzes durch die vorbestimmte Applikation; wobei das Anzeigen (104, 205) von Informationen, die mit dem Verarbeitungsergebnis zusammenhängen, in der Informationsschnittstelle, während die von dem Benutzer eingegebene Nachricht in der Informationsschnittstelle angezeigt wird, umfasst: Während der von dem Benutzer eingegebene Satz in der Informationsschnittstelle angezeigt wird, Anzeigen eines Verarbeitungsergebnisses, das von der vorbestimmten Applikation beim Verarbeiten des Satzes erzeugt wird.

2. Verfahren nach Anspruch 1, weiter umfassend:
Bestimmen (201) entsprechender Verhältnisse zwischen Nachrichtentypen und Applikationen, und Speichern der entsprechenden Verhältnisse.

3. Verfahren nach Anspruch 1 oder 2, wobei das Aufrufen (102, 203) einer Applikation zum Verarbeiten der Inhalte der Nachricht gemäß dem Typ der Nachricht umfasst:
wenn die von dem Benutzer eingegebene Nachricht als Kommunikationsinformationen erkannt wird, Aufrufen einer Kontaktliste in dem Endgerät und Senden der Kommunikationsinformationen an die Kontaktliste, wobei die Kontaktliste abgefragt wird, um zu bestimmen, ob die Kommunikationsinformationen mit einem oder mehreren Einträgen in der Kontaktliste zusammenpassen, wobei die Kontaktliste zumindest eines von einem lokalen Telefonbuch oder einer Kontaktliste in einer IM-Applikation umfasst.

4. Verfahren nach Anspruch 3, wobei das Anzeigen (104, 205) von Informationen, die mit dem Verarbeitungsergebnis zusammenhängen, in der Informationsschnittstelle, während die von dem Benutzer eingegebene Nachricht in der Informationsschnittstelle angezeigt wird, umfasst:
während die von dem Benutzer eingegebenen Kommunikationsinformationen in der Informationsschnittstelle angezeigt werden, sequenzielles Anzeigen der einen oder mehreren Einträge, die mit den Kommunikationsinformationen zusammenpassen; oder
während die von dem Benutzer eingegebenen Kommunikationsinformationen in der Informationsschnittstelle angezeigt werden, Anzeigen eines Identifikators der Kontaktliste, die mindestens einen Eintrag enthält, der mit den Kommunikationsinformationen zusammenpasst; oder
während die von dem Benutzer eingegebenen Kommunikationsinformationen in der Informationsschnittstelle angezeigt werden, Kennzeichnen, in der Informationsschnittstelle, der Kommunikationsinformationen, welche als mit einem oder mehr Einträgen in der Kontaktliste zusammenpassend bestimmt werden.

5. Verfahren nach Anspruch 1 oder 2, wobei das Aufrufen (102, 203) einer Applikation zum Verarbeiten der Inhalte der Nachricht gemäß dem Typ der Nachricht umfasst:
wenn die von dem Benutzer eingegebene Nachricht als ein Wort erkannt wird, Aufrufen eines Endgerätsystems und Senden des Worts an das Endgerätsystem zum Bestimmen, ob das Endgerät eine Applikation einschließt, deren Name mit dem Wort zusammenpasst.

6. Verfahren nach Anspruch 5, wobei das Anzeigen (104, 205) von Informationen, die mit dem Verarbeitungsergebnis zusammenhängen, auf der Informationsschnittstelle, während die von dem Benutzer eingegebene Nachricht in der Informationsschnittstelle angezeigt wird, umfasst:
während das Wort in der Informationsschnittstelle angezeigt wird, Anzeigen eines Identifikators einer Applikation, deren Name als mit dem Wort zusammenpassend bestimmt wird.

7. Einrichtung (300, 400) zum Verarbeiten von Informationen, wobei die Einrichtung (300, 400) umfasst:
ein Informations-Erkennungsmodul (301, 402), das so konfiguriert ist, dass es eine von einem Benutzer in einer Informationsschnittstelle eingegebene Nachricht empfängt, und Erkennen eines Typs der von dem Benutzer eingegebenen Nachricht;
ein Applikations-Aufrufmodul (302, 403), das so konfiguriert ist, dass es gemäß dem Typ der Nachricht eine Applikation zum Verarbeiten der Inhalte der Nachricht aufruft;
ein Informations-Empfangsmodul (303, 404), das so konfiguriert ist, dass es ein Verarbeitungsergebnis empfängt, das von der Applikation beim Verarbeiten der Inhalte der Nachricht erzeugt wird; und
ein Informations-Anzeigemodul (304, 405), das so konfiguriert ist, dass es, während die von dem Benutzer in der Informationsschnittstelle eingegebene Nachricht angezeigt wird, Informationen, die mit dem Verarbeitungsergebnis zusammenhängen, in der Informationsschnittstelle anzeigt;
**dadurch gekennzeichnet, dass**
das Applikations-Aufrufmodul (302, 403) zu Folgendem konfiguriert ist:
wenn die von dem Benutzer eingegebene Nachricht als eine Berechnungsformel erkannt wird, das Applikations-Aufrufmodul (302, 403) zum Aufrufen eines Rechners im Endgerät und zum Senden der Berechnungsformel an den Rechner zum Berechnen der Berechnungsformel durch den Rechner konfiguriert ist; wobei das Informations-Anzeigemodul (304, 405) dazu konfiguriert ist, während die von dem Benutzer eingegebene Berechnungsformel in der Informationsschnittstelle angezeigt wird, ein Berechnungsergebnis nach der Berechnungsformel oder in einer Kandidaten-Wort-Anzeigeregion der Informationsschnittstelle anzuzeigen; und/oder
wenn die von dem Benutzer eingegebene Nachricht als eine Zahl erkannt wird, das Applikations-Aufrufmodul (302, 403) dazu konfiguriert ist, eine Zahlungsapplikation im Endgerät aufzurufen und die Zahl zum Verarbeiten der Zahl durch Zahlungsapplikation an die Zahlungsapplikation zu senden; wobei das Informations-Anzeigemodul (304, 405) dazu konfiguriert ist, während die von dem Benutzer eingegebene Zahl in der Informationsschnittstelle angezeigt wird, den Benutzer aufzufordern anzugeben, ob ein Transfervorgang mit einem der Zahl entsprechenden Transferbetrag durchgeführt werden soll; und/oder
wenn die von dem Benutzer eingegebene Nachricht als ein Satz erkannt wird, das Applikations-Aufrufmodul (302, 403) dazu konfiguriert ist, eine im Endgerät installierte vorbestimmte Applikation aufzurufen und den Satz an die vorbestimmte Applikation zu senden, um den Satz durch die vorbestimmte Applikation zu verarbeiten; wobei das Informations-Anzeigemodul (304, 405) dazu konfiguriert ist, während der von dem Benutzer eingegebene Satz in der Informationsschnittstelle angezeigt wird, ein Verarbeitungsergebnis anzuzeigen, das von der vorbestimmten Applikation beim Verarbeiten des Satzes erzeugt wird.

8. Einrichtung (300, 400) nach Anspruch 7, wobei das Applikations-Aufrufmodul (302, 403) zu Folgendem konfiguriert ist:
wenn die von dem Benutzer eingegebene Nachricht als Kommunikationsinformationen erkannt wird, das Applikations-Aufrufmodul (302, 403) zum Aufrufen einer Kontaktliste in dem Endgerät und zum Senden der Kommunikationsinformationen an die Kontaktliste konfiguriert ist, wobei die Kontaktliste abgefragt wird, um zu bestimmen, ob die Kommunikationsinformationen mit einem oder mehreren Einträgen in der Kontaktliste zusammenpassen, wobei die Kontaktliste zumindest eines von einem lokalen Telefonbuch oder einer Kontaktliste in einer IM-Applikation umfasst;
oder wenn die von dem Benutzer eingegebene Nachricht als ein Wort erkannt wird, das Applikations-Aufrufmodul (302, 403) zum Aufrufen eines Endgerätsystems und zum Senden des Worts an das Endgerätsystem konfiguriert ist, um zu bestimmen, ob das Endgerät eine Applikation einschließt, deren Name mit dem Wort zusammenpasst.

## Revendications

1. Procédé de traitement d'informations, dans lequel le procédé est mis en œuvre dans un terminal et comprend :
la réception (101, 202) d'un message entré par un utilisateur dans une interface d'informations, et la reconnaissance d'un type du message entré par l'utilisateur ;
selon le type du message, l'appel (102, 203) d'une application pour traiter le contenu du message ;
la réception (103, 204) d'un résultat de traitement généré par l'application lors du traitement du contenu du message ; et
tout en affichant le message entré par l'utilisateur dans l'interface d'informations, l'affichage (104, 205) d'informations relatives au résultat de traitement dans l'interface d'information ;
**caractérisé en ce que** l'étape d'appel (102, 203), selon le type du message, d'une application pour traiter le contenu du message comprend au moins l'un des éléments suivants :
(i) lorsque le message entré par l'utilisateur est reconnu comme une formule de calcul, l'appel d'une calculatrice dans le terminal et l'envoi de la formule de calcul à la calculatrice pour calculer la formule de calcul via la calculatrice; dans lequel, tout en affichant le message entré par l'utilisateur dans l'interface d'informations, l'affichage (104, 205) d'informations relatives au résultat de traitement dans l'interface d'informations comprend : tout en affichant la formule de calcul entrée par l'utilisateur dans l'interface d'informations, l'affichage d'un résultat de calcul après la formule de calcul ou dans une région d'affichage de mot candidat de l'interface d'informations ;
(ii) lorsque le message entré par l'utilisateur est reconnu comme un nombre, l'appel d'une application de paiement dans le terminal et l'envoi du nombre à l'application de paiement pour traiter le nombre via l'application de paiement; dans lequel tout en affichant le message entré par l'utilisateur dans l'interface d'informations, l'affichage (104, 205) d'informations relatives au résultat de traitement dans l'interface d'informations comprend : tout en affichant le nombre entré par l'utilisateur dans l'interface d'informations, la demande à l'utilisateur si elle doit effectuer une opération de transfert avec un montant de transfert égal au nombre ; et
(iii) lorsque le message entré par l'utilisateur est reconnu comme une phrase, l'appel d'une application prédéterminée installée dans le terminal et l'envoi de la phrase à l'application prédéterminée pour traiter la phrase via l'application prédéterminée; dans lequel tout en affichant le message entré par l'utilisateur dans l'interface d'informations, l'affichage (104, 205) d'informations relatives au résultat de traitement dans l'interface d'informations comprend : tout en affichant la phrase entrée par l'utilisateur dans l'interface d'informations, l'affichage d'un résultat de traitement généré par l'application prédéterminée lors du traitement de la phrase.

2. Procédé selon la revendication 1, comprenant en outre :
la détermination (201) de relations correspondantes entre des types de message et des applications, et le stockage des relations correspondantes.

3. Procédé selon la revendication 1 ou 2, dans lequel, selon le type du message, l'appel (102, 203) d'une application pour traiter le contenu du message comprend :
lorsque le message entré par l'utilisateur est reconnu comme des informations de communication, l'appel d'une liste de contacts dans le terminal et l'envoi des informations de communication à la liste de contacts, le contact est interrogé pour déterminer si les informations de communication correspondent à une ou plusieurs entrées de la liste de contacts, dans lequel la liste de contacts comprend au moins un parmi un répertoire téléphonique local ou une liste de contacts dans une application de messagerie instantanée.

4. Procédé selon la revendication 3, dans lequel, tout en affichant le message entré par l'utilisateur dans l'interface d'informations, l'affichage (104, 205) d'informations relatives au résultat de traitement dans l'interface d'informations comprend :
tout en affichant les informations de communication entrées par l'utilisateur dans l'interface d'informations, l'affichage en séquence des une ou plusieurs entrées qui correspondent aux informations de communication ; ou
tout en affichant les informations de communication entrées par l'utilisateur dans l'interface d'informations, l'affichage d'un identifiant de la liste de contacts qui contient au moins une entrée correspondant aux informations de communication ; ou
tout en affichant les informations de communication entrées par l'utilisateur dans l'interface d'informations, le marquage, dans l'interface d'informations, des informations de communication qui sont déterminées comme correspondant à une ou plusieurs entrées dans la liste de contacts.

5. Procédé selon la revendication 1 ou 2, dans lequel, selon le type du message, l'appel (102, 203) d'une application pour traiter le contenu du message, comprend :
lorsque le message entré par l'utilisateur est reconnu comme un mot, l'appel d'un système de terminal et l'envoi du mot au système de terminal pour déterminer si le terminal inclut une application dont le nom correspond au mot.

6. Procédé selon la revendication 5, dans lequel, tout en affichant le message entré par l'utilisateur sur l'interface d'informations, l'affichage (104, 205) d'informations relatives au résultat de traitement dans l'interface d'informations comprend :
tout en affichant le mot dans l'interface d'informations, l'affichage d'un identifiant d'une application dont le nom est déterminé comme correspondant au mot.

7. Dispositif (300, 400) de traitement d'informations, dans lequel le dispositif (300, 400) comprend :
un module de reconnaissance d'informations (301, 402) configuré pour recevoir un message entré par un utilisateur dans une interface d'informations, et pour reconnaître un type du message entré par l'utilisateur ;
un module d'appel d'application (302, 403) configuré pour, selon le type du message, appeler une application pour traiter le contenu du message ;
un module de réception d'informations (303, 404) configuré pour recevoir un résultat de traitement généré par l'application lors du traitement du contenu du message ; et
un module d'affichage d'informations (304, 405) configuré pour, tout en affichant le message entré par l'utilisateur dans l'interface d'informations, afficher des informations relatives au résultat de traitement dans l'interface d'informations ;
**caractérisé en ce que** le module d'appel d'application (302, 403) est configuré pour :
lorsque le message entré par l'utilisateur est reconnu comme une formule de calcul, le module d'appel d'application (302, 403) est configuré pour appeler une calculatrice dans le terminal et envoyer la formule de calcul à la calculatrice pour calculer la formule de calcul via la calculatrice; dans lequel le module d'affichage d'informations (304, 405) est configuré pour, tout en affichant la formule de calcul entrée par l'utilisateur dans l'interface d'informations, afficher un résultat de calcul après la formule de calcul ou dans une région d'affichage de mot candidat de l'interface d'informations ; et/ou
lorsque le message entré par l'utilisateur est reconnu comme un nombre, le module d'appel d'application (302, 403) est configuré pour appeler une application de paiement dans le terminal et envoyer le nombre à l'application de paiement pour traiter le nombre via l'application de paiement; dans lequel le module d'affichage d'informations (304, 405) est configuré pour, tout en affichant le nombre entré par l'utilisateur dans l'interface d'informations, demander à l'utilisateur s'il doit effectuer une opération de transfert avec un montant de transfert égal au nombre ; et/ou
lorsque le message entré par l'utilisateur est reconnu comme une phrase, le module d'appel d'application (302, 403) est configuré pour appeler une application prédéterminée installée dans le terminal et envoyer la phrase à l'application prédéterminée pour traiter la phrase via l'application prédéterminée ; dans lequel le module d'affichage d'informations (304, 405) est configuré pour, tout en affichant la phrase entrée par l'utilisateur dans l'interface d'informations, afficher un résultat de traitement généré par l'application prédéterminée lors du traitement de la phrase.

8. Dispositif (300, 400) selon la revendication 7, dans lequel le module d'appel d'application (302, 403) est configuré pour :
lorsque le message entré par l'utilisateur est reconnu comme des informations de communication, le module d'appel d'application (302, 403) est configuré pour appeler une liste de contacts dans le terminal et envoyer les informations de communication à la liste de contacts, le contact est interrogé pour déterminer si les informations de communication correspondent à une ou plusieurs entrées de la liste de contacts, la liste de contacts comprend au moins un parmi un répertoire téléphonique local ou une liste de contacts dans une application de messagerie instantanée ;
ou lorsque le message entré par l'utilisateur est reconnu comme un mot, le module d'appel d'application (302, 403) est configuré pour appeler un système de terminal et envoyer le mot au système de terminal pour déterminer si le terminal inclut une application dont le nom correspond au mot.
